# EUROPEAN PATENT APPLICATION

(11) **EP 4 844 674 A1**
(43) Date of publication of application: **25.11.2026**
(21) Application number: 25177632.4
(22) Date of filing: 20.05.2025
(51) Int. Cl.: G06T 7/00, G06T 7/20, H04N 19/124, H04N 19/25, H04N 19/70

(54) **SCALABLE METADATA ASSOCIATED WITH AN OBJECT DETECTED IN A VIDEO**

(71) Applicant: Axis AB, 223 69 Lund (SE)
(72) Inventor: Edpalm, Viktor, 223 69 LUND (SE); Yuan, Song, 223 69 LUND (SE)
(74) Representative: AWA Sweden AB

(57) **Abstract**

The present disclosure relates to method (400) for handling metadata (320) associated with an object detected in a video, the method comprising: obtaining (S402) kinematic data of the object as detected in a first image of the video; determining (S404) first data by quantizing the kinematic data using a predefined quantization scheme; determining (S406) second data by calculating a difference between the kinematic data and the quantized kinematic data; and including (S408) the first data and the second data in the metadata.

## Description

### Technical Field

The present disclosure relates to metadata generation for object tracking in video data, and more particularly to the representation of kinematic information of an object within such metadata.

### Background

Modern video capture systems increasingly generate not only audiovisual content but also supplementary metadata streams that represent a semantic understanding of the captured scene. These metadata streams are typically produced through video analysis techniques and may include information about detected and tracked objects, such as classifications, identities, and motion-related parameters.

A subset of such metadata is object kinematics, which describes the motion characteristics of tracked objects, for example including position, velocity, direction of movement, etc. Representing object kinematics in metadata allows, for example, downstream systems to search for particular objects based on their motion profiles, such as identifying objects that moved through a specific region, travelled at an unusual speed, or followed a particular path. In addition, statistical analyses can be performed over aggregated kinematic data to uncover patterns such as typical movement behaviours, object flow distributions, etc.

As video processing and analysis systems continue to evolve, the complexity and granularity of object kinematic metadata have increased significantly. In many scenarios, the metadata stream may now contain more data than the corresponding video stream. This increase in metadata size poses challenges in terms of storage requirements, transmission bandwidth, and processing efficiency.

There is thus a need for improvements in this context.

### Summary

In view of the above, solving or at least reducing one or several of the drawbacks discussed above would be beneficial, as set forth in the attached independent patent claims.

According to a first aspect of the present disclosure, there is provided a method for handling metadata associated with an object detected in a video, the method comprising: obtaining kinematic data of the object as detected in a first image of the video; determining first data by quantizing the kinematic data using a predefined quantization scheme; determining second data by calculating a difference between the kinematic data and the quantized kinematic data; and including the first data and the second data in the metadata.

As used herein, "kinematic data" refers to motion-related parameters that describe the dynamic state of an object detected in a video. Such data may include, for example, the position of the object, which can be represented as a position, or a bounding box of the object in image coordinates (e.g., pixel positions within a video frame) or in global coordinates (e.g., a world coordinate system such as GPS coordinates). In addition to position, kinematic data may include the velocity of the object (including speed and direction of movement), and, where applicable, further attributes such as acceleration or orientation. The kinematic data is typically derived from analysis of one or more video frames and represents the motion characteristics of the object at a particular point in time or over a defined time interval.

As used herein, a "predefined quantization scheme" refers to a fixed and known mapping procedure that converts continuous or high-precision kinematic values into a set of discrete representative values. The quantization scheme may specify a range of allowable values, a quantization step size or resolution, and one or more rounding rules to determine how input values are assigned to quantized output values. The purpose of applying such a scheme is thus to reduce the precision of the kinematic data in a predetermined manner. In some cases, the quantization behaviour may be controlled or adapted using quantization control (QC) values, which may indicate a desired quantization precision. QC values may be selected based on the object type, importance, or context, enabling dynamic adjustment of the quantization granularity.

The inventors have realized that providing metadata as a combination of a coarse representation (based on quantized data) and a residual delta (representing the difference from the original kinematic data) may offer various advantages in terms of encoding flexibility and efficient downstream processing. By separating the metadata into a primary quantized component (represented by the first data) and a supplementary delta component (represented by the second data), an encoder and/or decoder can dynamically adapt to varying application requirements and system constraints. For example, different encoding schemes may be applied depending on available bandwidth, storage capacity, or required precision. On the receiver side, this structure enables flexible decoding and selective retention, such as applying distinct pruning or aging strategies to the first data and the second data. This layered approach thus facilitates scalable metadata management, allowing for an optimized performance across a spectrum of use cases.

In some examples, the method further comprises saving the first data and the second data as metadata in a file associated with the object; determining a time span since saving the first and second data as metadata in the file; and upon the time span exceeding a threshold time span, deleting the second data from the file.

Advantageously, this allows the stored metadata to retain high precision for a limited time, such as for short-term analytic use, while reducing storage requirements over time by discarding the residual delta after the threshold time span has elapsed. The course data may continue to be retained in the file/memory for longer-term purposes, such as statistical analysis.

In some examples, determining the first data comprises: determining quantized data by quantizing the kinematic data using the predefined quantization scheme; and compressing the quantized data using first lossless compression. In these examples, determining the second data comprises: determining difference data by calculating a difference between the kinematic data and the quantized data; and compressing the difference data using second lossless compression; wherein the first lossless compression differs from the second lossless compression.

Advantageously, by separating the kinematic data into quantized data and difference data, and applying distinct lossless compression methods to each, the overall compressibility of the metadata may be improved. The quantized data and the difference data typically exhibit different statistical characteristics and these may be more effectively exploited using compression schemes optimized for each respective type. For example, the quantized data may be relatively uniform, while the difference data may be centred around zero. By using the first and second lossless compression accordingly, a lower total bandwidth or storage footprint may be achieved compared to applying a single lossless compression to the full-resolution kinematic data.

In some examples, determining the first data comprises: determining quantized data by quantizing the kinematic data using the predefined quantization scheme; and compressing the quantized data using first lossy compression. In these examples, determining the second data comprises: determining difference data by calculating a difference between the kinematic data and the quantized data; and compressing the difference data using the first lossy compression.

Advantageously, by separating the kinematic data into a quantized component and a residual component prior to compression, and applying the same lossy compression scheme to both, it is possible to achieve improved compression performance compared to applying the lossy compression directly to the full-resolution kinematic data. This separation allows the lossy compression to exploit the distinct statistical characteristics of the quantized data and the difference data more effectively, resulting in a reduced overall bitrate or improved fidelity at the same bitrate.

In some examples, determining the first data comprises: determining quantized data by quantizing the kinematic data using the predefined quantization scheme; and compressing the quantized data using a lossless compression. In these examples, determining the second data comprises: determining difference data by calculating a difference between the kinematic data and the quantized data; and compressing the difference data using lossy compression.

Advantageously, this approach enables a hybrid encoding strategy that balances precision and compression efficiency by selectively applying lossless and lossy compression to different components of the metadata.

In some examples, the method further comprises transmitting the metadata to a client using a standardized metadata protocol; wherein the first data is added to a field in the standardized metadata protocol being defined in the standardized metadata protocol as relating to a type of the kinematic data; and wherein the second data is added to a custom field in the standardized metadata protocol.

Advantageously, this approach ensures backward compatibility, as the first data is placed in a standard field understood by compliant clients, while the second data is added to a custom field. Clients that do not recognize the field with the custom residual data (the second data) will simply ignore it, resulting in use of only the coarse metadata level (the first data) and thus achieving baseline functionality. The standardized metadata protocol may for example be a ONVIF or VAPIX metadata protocol.

In some examples, determining the second data comprises: determining difference data by calculating a difference between the kinematic data and the quantized kinematic data; and determining the second data by quantizing the difference data using a second predefined quantization scheme; wherein the method further comprises: determining third data by calculating a difference between the kinematic data and a sum of the quantized kinematic data and the quantized difference data; and including the third data in the metadata.

Advantageously, the use of multiple quantized layers, such as a second or third data layer derived from successive differences, allows for a further increased flexibility in encoding strategies, storage management, etc. as discussed herein. This layered structure supports a scalable metadata representation of kinematic data, and any number of such layers may be implemented, depending on system requirements.

In some examples, the method further comprises obtaining the metadata at a client; extracting the first data from the obtained metadata; and disregarding to extract the second data from the obtained metadata.

As used herein, "obtaining the metadata at a client" may refer to obtaining the metadata in a variety of contexts, including both real-time reception from an encoder during e.g., live transmission and retrieval from memory or storage in a batch-processing scenario.

Advantageously, these examples enable a metadata decoder to make an informed decision about whether to extract additional layers, such as the second data, based on general criteria such as available processing resources, application requirements, or relevance of the object. As a result, unnecessary parsing or decoding of higher-resolution metadata tracks can be avoided, thereby reducing computational load and improving responsiveness.

In some embodiments, disregarding to extract the second data from the received metadata comprises at least one of: determining, by the client, that an importance level of the object is below a threshold importance level; determining, by the client, that a confidence level of the object is below a threshold confidence level; determining, by the client, that available computational resources of the client is below a threshold; and determining, by the client, based on a query from a user, that the second data can be disregarded.

In some examples, the decision by the client to disregard extraction of the second data from the received metadata may be based on a user query that defines the required level of precision. For example, in a query such as "How many cars turn right at this intersection over the last three months?", the client may determine that only the coarse kinematic data (first data) is sufficient to fulfil the request. **In** such a case, extracting enhanced precision data would provide limited additional value while significantly increasing processing cost, particularly when querying large datasets. Conversely, for more detail-sensitive queries, such as "How many cars are using a specific lane?", the client may determine that finer granularity is necessary, thereby requiring extraction of the second data.

In some examples, the method further comprises obtaining second kinematic data of the object as detected in a second image of the video, the second image being subsequent to the first image in the video; determining fourth data by quantizing the kinematic data using the predefined quantization scheme; and including the fourth data in the metadata.

Advantageously, by including only the quantized (coarse) kinematic data for selected frames, such as the second image, the volume of metadata that must be transmitted or stored may be reduced, thereby achieving bandwidth and storage savings.

According to a second aspect of the disclosure, the above object is achieved by a non-transitory computer-readable storage medium having stored thereon instructions for implementing the method according to the first aspect when executed on a device having processing capabilities.

According to a third aspect of the disclosure, the above object is achieved by a device for handling metadata associated with an object detected in a video, the device configured for: obtaining kinematic data of the object as detected in a first image of the video; determining first data by quantizing the kinematic data using a predefined quantization scheme; determining second data by calculating a difference between the kinematic data and the quantized kinematic data; and including the first data and the second data in the metadata.

According to a fourth aspect of the disclosure, the above object is achieved by a system for handling metadata associated with an object detected in a video, the system comprising a first device according to the third aspect and a second device configured for: saving the first data and the second data as metadata in a file associated with the object; determining a time span since saving the first and second data as metadata in the file; and upon the time span exceeding a threshold time span, deleting the second data from the file.

According to a fifth aspect of the disclosure, the above object is achieved by a system for handling metadata associated with an object detected in a video, the system comprising a first device according to the third aspect and a third device configured for: obtaining the metadata; extracting the first data from the obtained metadata; and disregarding to extract the second data from the obtained metadata.

The second, third, fourth and fifth aspects may generally have the same features and advantages as the first aspect.

### Brief Description of the Drawings

The above, as well as additional objects, features, and advantages of the present disclosure, will be better understood through the following illustrative and non-limiting detailed description of embodiments of the present disclosure, with reference to the appended drawings, where the same reference numerals will be used for similar elements, wherein:
Figure 1 shows a scene with an object, for which scalable metadata is determined, according to a first embodiment;
Figure 2 shows the object from figure 1, for which scalable metadata is determined, according to a second embodiment;
Figure 3 shows a system implementing scalable metadata, according to embodiments;
Figure 4 shows a flow chart of a method for handling metadata associated with an object detected in a video, according to embodiments.

### Detailed Description

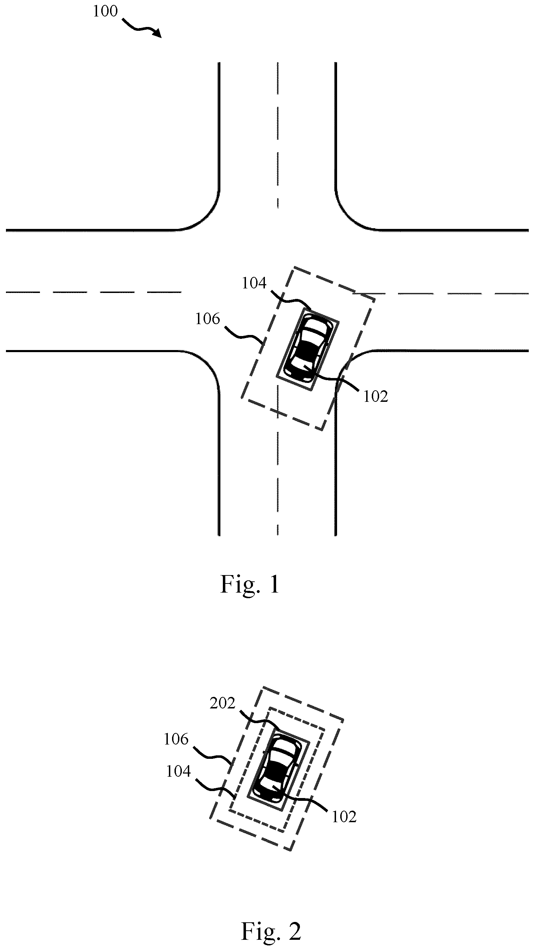

Metadata is increasingly used in video systems to support various forms of object analysis and scene understanding. However, as metadata becomes more detailed, challenges arise in efficiently managing its storage, transmission, and processing. The present disclosure addresses these limitations by techniques for producing, handling, and storing scalable metadata associated with kinematic data of objects detected in video. The kinematic data is divided into multiple layers of detail, including a coarse quantized representation and one or more residual components. These layers may be compressed independently, selectively transmitted or extracted, or retained based on context, enabling efficient bandwidth usage, adaptive coding, efficient processing and flexible long-term storage strategies. Embodiments of these techniques will now be described in conjunction with figures 1-4.

Figure 1 illustrates a scene 100 being captured by a video recording system. The scene depicts a road intersection where a vehicle 102 is making a right turn. The vehicle 102 is being tracked by an object tracking application analysing the video. From the captured image frames of the video, kinematic data associated with the vehicle 102 can be derived. This kinematic data may be updated for every image frame or for a selected subset of image frames, depending on the configuration and requirements of the object tracking application.

The kinematic data may include, for example, the position of the vehicle 102, as well as its velocity and direction of motion. In addition to motion-related parameters, the object tracking application may associate the vehicle with auxiliary metadata, such as an object identifier, classification (e.g., vehicle type), detection confidence level, or tracking status. The kinematic data and the auxiliary metadata may further be indexed, for example using a time stamp or frame number, identifying which image frame these data are associated with.

In the example illustrated in Figure 1, the kinematic data includes a bounding box associated with the object 102. The bounding box may define, for example, the pixel coordinates of a rectangular region that spatially encloses the object 102 within a particular image frame of the video, referred to herein as a first image. For example, the bounding box may be defined at the pixel level by the coordinates of its four corners in the image frame, forming, in figure 1, a rotated rectangle that spatially encloses the object 102. This may be expressed as four (x, y) coordinate pairs such as (1023, 752), (1237, 726), (1349, 1111) and (1136, 1138), corresponding to the corners of the bounding box. Note that these numbers are purely illustrative and are provided for the purpose of explaining the concepts related to scalable metadata representation, and do not reflect any specific measurement or limitation of the disclosure.

As discussed herein, the kinematic data may be represented as layered metadata associated with the object. To produce a coarse approximation of the original bounding box, the kinematic data is quantized using a predefined quantization scheme. The resulting quantized (coarse) bounding box is illustrated in Figure 1 as a dashed rectangle 106. For ease of explanation, the coarse bounding box 106 is shown as uniformly larger than the actual bounding box. In practice, however, the coarse bounding box may be larger, smaller, or differently shaped, depending on the quantization scheme and geometric properties of the original bounding box.

For example, to produce a coarse approximation, each coordinate can be quantized to the nearest multiple of 16. This is done by rounding each value to the closest integer divisible by 16. The quantized coordinates become: (1024, 752), (1232, 720), (1344, 1112), and (1136, 1136). This new bounding box forms the first data, representing a coarse approximation of the original bounding box 104. The difference between each original and quantized coordinate may then be computed and stored as second data, enabling scalable reconstruction when higher precision is required. In this example, the second data is the set of coordinate residuals: (-1, 0), (+5, +6), (+5, -1), (0, +2).

The metadata may thus be used to define the bounding box of the object 102 on a coarse level 106 and on a detailed level 104 (which in this example corresponds to the actual bounding box).

In some examples, the layered structure comprises three layers. This is schematically illustrated in figure 2. Similar to figure 1, for ease of visualization, each resulting bounding box 104, 106, 202 (using the three layers) are shown as stepwise uniformly larger in size.

For example, using the same example for the kinematic data associated with the object 102, i.e., four (x, y) coordinate pairs: (1023, 752), (1237, 726), (1349, 1111), and (1136, 1138), the following may be achieved. The kinematic data is first quantized using a first predefined quantization scheme, for example, rounding to the nearest multiple of 16 pixels. This results in a coarse approximation, referred to as the first data, with the following quantized coordinates: (1024, 752), (1232, 720), (1344, 1112), and (1136, 1136).

The difference between the original kinematic data and the first data is then computed ((-1, 0), (+5, +6), (+5, -1), (0, +2)) and quantized using a second predefined quantization scheme, such as rounding to the nearest multiple of 8 pixels. This produces the second data, consisting of the following quantized residuals: (0, 0), (8, 8), (8, 0), and (0, 0).

To enable further refinement, a third data is determined by calculating the difference between the original kinematic data and the sum of the quantized kinematic data and the quantized difference data. This third data captures the remaining fine-grained residual values and is defined by the following coordinates: (-1, 0), (-3, -2), (-3, -1), and (0, +2).

The three layer metadata may thus be used to define the bounding box of the object 102 on a coarse level 106 and on a more detailed level 104 and on a finest level 202 (which in this example corresponds to the actual bounding box of the object 102).

While the above examples focus on bounding box coordinates, it should be noted that the same scalable approach can be applied to any type of kinematic data associated with the object. This includes, but is not limited to, position, velocity, acceleration, orientation, and angular velocity. The layered structure allows for varying levels of precision to be represented, depending on application requirements. The predefined quantization schemes used in each layer may be selected based on the nature of the data and system constraints, and are not limited to fixed schemes such as rounding to multiples of 16 or 8. For example, in the case of object position, the coarse level of metadata may simply indicate which quadrant of the image frame the object occupies. In a next enhancement layer, this quadrant may be subdivided into smaller regions, and in a further layer, the precise pixel-level position may be defined.

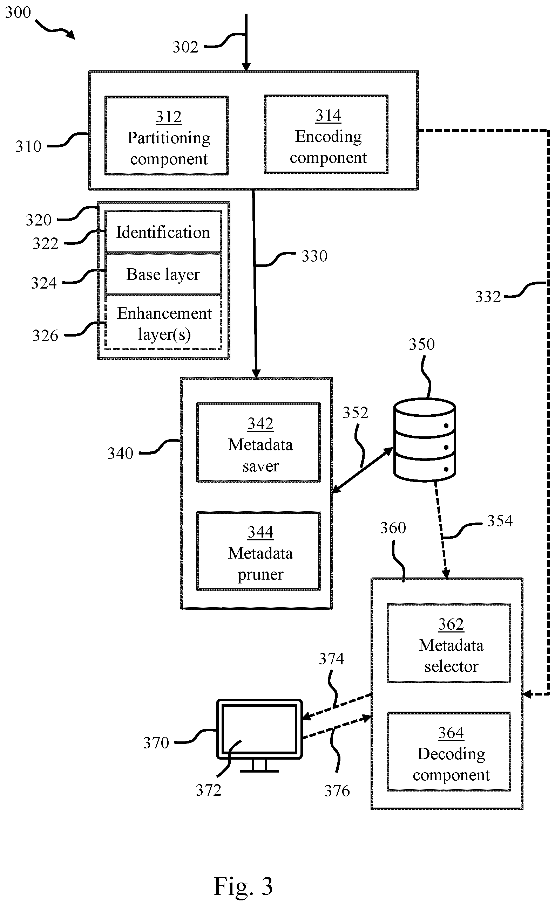

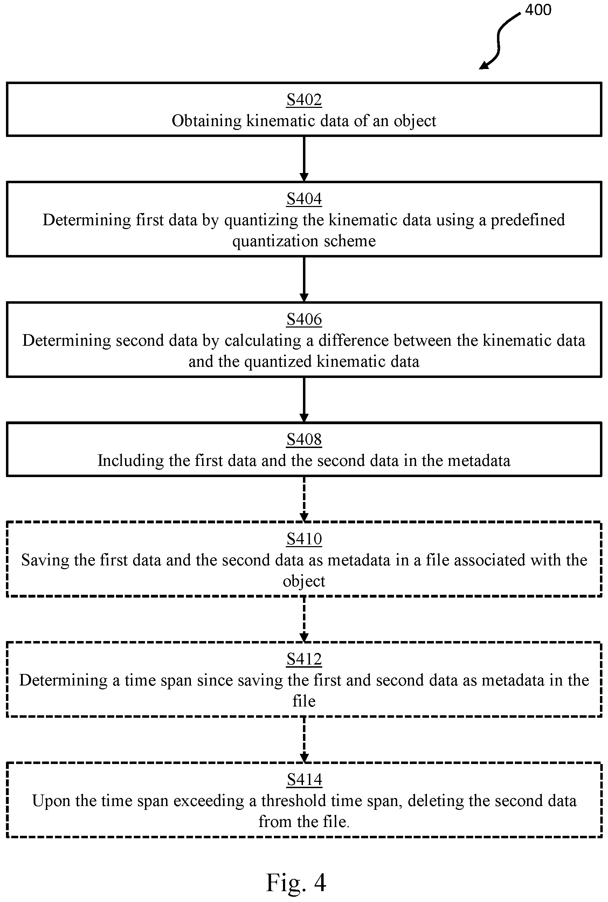

Figure 3 show by way of example a system 300 configured to implement the techniques for determining and handling scalable metadata representing kinematic data of a detected object in a video, as described herein. Embodiments of these techniques will now be described in conjunction with the flow chart 400 in figure 4.

The system 300 comprises a metadata handling device 310. The metadata handling device 310 is configured for obtaining S402 kinematic data 302 of an object as detected in a first image of the video. The metadata handling device 310 may be integrated within an object tracking device, such that it obtains S402 the kinematic data 302 directly from internal tracking algorithms. In other examples, the metadata handling device 310 may be externally connected to the object tracking device and obtain S402 kinematic data 302 via a communication interface. Alternatively, the metadata handling device 310 may obtain S402 kinematic data 302 from other sources, such as a storage system or database.

The metadata handling device 310 comprises a partitioning component 312. The partitioning component 312 may be configured to determining S404 first data by quantizing the kinematic data using a predefined quantization scheme and determining S406 second data by calculating a difference between the kinematic data and the quantized kinematic data. The first data may be included S408 in metadata 320 associated with the object, e.g., as a base layer 324. The second data may be included S408) in metadata 320 associated with the object, e.g., as an enhancement layer 326.

The portioning component 312 may be implemented to provide more than two layers of metadata, as discussed above, such that a plurality of enhancement layers 326 (second data, third data, etc.) are included in the metadata 320 associated with the object.

The metadata 320 may further include identification data 322, such as a frame identifier, timestamp, object identifier, etc., which enable the kinematic data as represented in the metadata 320 to be associated with a specific object at a specific point in time within the video, i.e. associated with the first frame of the video.

The first data 324 and second data(s) 326 may be encoded when included in the metadata 320. For this reason, the metadata handling device 310 may include an encoding component 314. The encoding component 314 may encode the first and second data in various ways as discussed herein.

For example, in some embodiments, the first data 324 and second data 326 are compressed using different lossless compression schemes. This allows the encoding to exploit the different statistical characteristics of each layer 324, 326. The first data 324, being quantized and typically more uniform or bounded, may be efficiently compressed using a temporal coding techniques such as Run-Length Encoding (RLE) or delta coding. The second data 326, which represents smaller and often zero-centred residuals, may instead benefit from Huffman coding, entropy coding, or arithmetic coding, which better handle non-uniform distributions of such a type.

In other embodiments, both the first and second data 324, 326 are compressed using the same lossy compression scheme. This approach simplifies implementation and is particularly suitable when the system 300 is primarily focused on reducing bandwidth or storage, and minor distortions in all layers 324, 326 are acceptable. For example, both the coarsest representation of the kinematic data (first data) and the residual values (second data, third data, etc.) may be encoded using a common transform-based codec such as JPEG-like quantization.

In yet other embodiments, the encoding component 314 may apply a hybrid compression strategy. For example, the first data 324 may be compressed using lossless compression, while the second data 326 is compressed using lossy compression. This approach is advantageous in scenarios where the coarse representation (first data 324) must be preserved exactly while allowing the higher-precision details (second data 326) to be stored more compactly, accepting some loss. For instance, the first data 324 may be encoded using temporal encoding techniques, while the second data 326 may be encoded using a transform-based codec. This strategy is particularly beneficial when the first data is relatively smooth or predictable and can be efficiently encoded losslessly, while the second data captures limited but high-frequency deviations, such as position noise with constrained amplitude, that are better suited to lossy encoding.

In some examples, the metadata handling device 310 may be further configured to include only the first data, i.e., the coarse quantized kinematic data, in the metadata associated with certain frames of the video. For example, in a second frame of the video, the metadata associated with the object may contain only the first data, and omit the second data or any enhancement layers. This may be beneficial for reducing bandwidth or storage requirements when high-precision kinematic data is not required for every frame. In some embodiments, during subsequent analytics, the omitted second data for such frames may be interpolated or estimated based on available second data from other frames, such as preceding or following frames in which the residual data is present.

It should be noted that the terms "first frame" and "second frame" as used herein are intended solely to identify different frames within the video and do not imply any specific ordering. The second frame may or may not be immediately subsequent to the first frame.

In some examples, the metadata 320 is then transmitted using an interface 330 to a metadata storage device 340, which may be configured for storing and/or pruning metadata 320 as stored in a storage 350 such as a database. The metadata storage device 340 may be implemented within the same physical device as the metadata handling device 310, or it may be a separate device in communication with the metadata handling device 310 via a network 330 or local interface 330.

In some examples, the metadata storage device 340 may be configured to save S410 both the first data 324 and the second data 326 as part of the stored metadata in a file associated with the object, the file being stored in the storage 350. The storage 350 may be implemented within the same physical device as the metadata storage device 340, or it may be a separate storage/database 350 in communication with the metadata storage device 340 via a network 352 or local interface 352.

The saving may for example be implemented by a metadata saver component 342. The metadata storage device 340 may then determine S412 a time span since this data was saved and, upon the time span exceeding a predefined threshold, perform deletion/pruning S414 (e.g., by a metadata pruner component 344) of the second data 326 from the file while retaining the first data 324. This enables metadata lifecycle management in which high-precision information (the second data) is preserved temporarily in the storage 350, e.g., to facilitate detailed analysis of recent activity, while coarse metadata (the first data) is retained for long-term use in the storage 350, such as for trend analysis, or compliance purposes.

The system 300 may further comprise a metadata extractor device 360, configured to retrieve and interpret metadata 320 associated with objects detected in video. The metadata extractor device 360 comprises a metadata selector 362, which is responsible for extracting the relevant metadata from available sources. The metadata selector 362 is configured to, for a specific object and image frame, extract the first data 324, i.e., the coarse quantized kinematic data, and, depending on operational context, to extract the second data 326, i.e., the residual or enhancement layer data.

The decision to extract the second data may be based on several factors, including system constraints, object-specific metadata attributes, or user-defined queries. For instance, the metadata selector 362 may extract only the first data 324 when performing high-level statistical analyses, such as determining *"how many vehicles turned right at an intersection over the last three months"* where coarse positional data is sufficient and analysing large volumes of metadata efficiently is a priority. Conversely, for more precision-sensitive tasks, such as determining *"how many vehicles used a specific lane",* the selector 362 may also extract the second data to enable detailed analysis of the object's bounding box or trajectory.

The metadata extractor device 360 further comprises a decoding component 364, which decodes the extracted metadata according to the encoding formats applied by the metadata handling device 310. This may include various lossless or lossy compression schemes used for encoding the first data 324 and second data 326.

In the example of figure 3, the metadata selector 362 is connected via an interface 374 to a user-facing or client device 370, which may be configured to display the extracted metadata in association with the video or to process it further in an analytics pipeline. An operator of the device 370 may interact with the metadata selector 362 through a user interface 372, issuing queries (transmitted over an interface 376 to the metadata extractor device 360) that define the scope and level of detail required from the metadata 320. Based on the query, for example, whether only rough object location is needed, or whether precise motion and shape information is necessary, the metadata selector 362 adaptively determines whether to extract only the first data 324 or also include one or more enhancement layers 326 such as the second data.

The metadata selector device 362 and the user facing device 370 may be implemented in a single device or in separate devices.

The metadata selector 362 may connect directly to the metadata handling device 310 via an interface 332 to support real-time metadata handling, such as during live monitoring. Additionally, or alternatively, the metadata selector 362 may access metadata stored in the storage 350 via an interface 354, supporting batch or retrospective analysis.

In some examples, the interfaces 330 and 332 used for transmitting metadata 320 between devices, such as between the metadata handling device 310 and the metadata extractor device 360 or the metadata saver device 340 may conform to a standardized metadata protocol, such as ONVIF. In such implementations, the first data 324 may be included in a field defined by the standardized metadata protocol as corresponding to a recognized type of kinematic information, such as position, bounding box, or motion direction. This ensures compatibility with existing ONVIF-compliant clients and systems.

The second data 326, which represents enhancement or residual data not covered by the standardized metadata protocol, may be included in a custom field of the protocol. This allows systems capable of interpreting the second data 326 to access detailed information, while ensuring that systems unaware of the custom extension can still process the metadata using only the standardized fields, preserving backward compatibility with a variety of clients.

Furthermore, the metadata 320 itself may be defined using structured data formats such as JSON or XML, depending on system requirements and interoperability goals. These formats enable flexible encoding of both standard and custom fields and are well-suited for both real-time transmission and storage.

It should be noted that the division of devices and components as illustrated in figure 3 is provided solely by way of example to facilitate explanation of the described functionalities. The various devices shown, such as the metadata handling device 310, the metadata extractor device 360, and their associated components 312, 314, 342, 344, 362, 364 may be combined, distributed, or reorganized in other configurations without departing from the scope of the techniques described herein. For instance, two or more devices 310, 340, 360 may be integrated into a single physical or logical device, or a single device 310, 340, 360 or component 312, 314, 342, 344, 362, 364 may be distributed across multiple computing nodes or services. Similarly, functional blocks such as the partitioning component 312 or metadata selector 362 may be implemented in hardware, software, or a combination thereof, depending on system requirements. The described architecture in figure 3 is thus not intended to limit the implementation, and other architectural variations may be employed to achieve the same or equivalent functionality.

The process 400, as well as any other methods described herein, may be implemented as a standalone routine or as part of a larger video analytics, object tracking, or metadata generation and handling system. In some implementations, the process 400, as well as any other methods or techniques described herein, is carried out by instructions executable by one or more processors, which may reside within a single device or be distributed across multiple devices in a networked system. The instructions for performing the method may be stored on one or more non-transitory computer-readable media, such as flash memory, ROM, hard drives, or solid-state storage.

Suitable processors for executing the method steps include, for example, general-purpose or special-purpose microprocessors, which may be implemented as single-core or multi-core architectures. These processors may operate independently or cooperatively to perform the sequence of steps described in connection with figures 1-4. In some embodiments, the functionality may be accelerated or fully implemented using application-specific integrated circuits (ASICs), digital signal processors (DSPs), field-programmable gate arrays (FPGAs), or other dedicated hardware accelerators optimized for efficient kinematic data processing, metadata encoding, and scalable transmission or storage.

The above embodiments are to be understood as illustrative examples of the disclosure. Further embodiments of the disclosure are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the disclosure, which is defined in the accompanying claims.

## Claims

1. A method (400) for handling metadata (320) associated with an object (102) detected in a video, the method comprising:
obtaining (S402) kinematic data (302) of the object as detected in a first image of the video;
determining (S404) first data (324) by quantizing the kinematic data using a predefined quantization scheme;
determining (S406) second data (326) by calculating a difference between the kinematic data and the quantized kinematic data; and
including (S408) the first data and the second data in the metadata.

2. The method of claim 1, further comprising:
saving (S410) the first data and the second data as metadata in a file associated with the object;
determining (S412) a time span since saving the first and second data as metadata in the file; and
upon the time span exceeding a threshold time span, deleting (S414) the second data from the file.

3. The method of any one of claims 1-2,
wherein determining the first data comprises:
determining quantized data by quantizing the kinematic data using the predefined quantization scheme; and
compressing the quantized data using first lossless compression;
wherein determining the second data comprises:
determining difference data by calculating a difference between the kinematic data and the quantized data; and
compressing the difference data using second lossless compression;
wherein the first lossless compression differs from the second lossless compression.

4. The method of any one of claims 1-2,
wherein determining the first data comprises:
determining quantized data by quantizing the kinematic data using the predefined quantization scheme; and
compressing the quantized data using first lossy compression;
wherein determining the second data comprises:
determining difference data by calculating a difference between the kinematic data and the quantized data; and
compressing the difference data using the first lossy compression.

5. The method of any one of claims 1-2,
wherein determining the first data comprises:
determining quantized data by quantizing the kinematic data using the predefined quantization scheme; and
compressing the quantized data using a lossless compression;
wherein determining the second data comprises:
determining difference data by calculating a difference between the kinematic data and the quantized data; and
compressing the difference data using lossy compression.

6. The method of any one of claims 1-5, further comprising:
transmitting the metadata to a client using a standardized metadata protocol;
wherein the first data is added to a field in the standardized metadata protocol being defined in the standardized metadata protocol as relating to a type of the kinematic data; and
wherein the second data is added to a custom field in the standardized metadata protocol.

7. The method of claim 6, wherein the standardized metadata protocol is a ONVIF metadata protocol.

8. The method of any one of claims 1-7, wherein determining the second data comprises:
determining difference data by calculating a difference between the kinematic data and the quantized kinematic data; and
determining the second data by quantizing the difference data using a second predefined quantization scheme;
wherein the method further comprises:
determining third data by calculating a difference between the kinematic data and a sum of the quantized kinematic data and the quantized difference data; and
including the third data in the metadata.

9. The method of any one of claims 1-8, further comprising:
obtaining the metadata at a client;
extracting the first data from the obtained metadata; and
disregarding to extract the second data from the obtained metadata.

10. The method of claim 8, wherein disregarding to extract the second data from the received metadata comprises at least one of:
determining, by the client, that an importance level of the object is below a threshold importance level;
determining, by the client, that a confidence level of the object is below a threshold confidence level;
determining, by the client, that available computational resources of the client is below a threshold; and
determining, by the client, based on a query from a user, that the second data can be disregarded.

11. The method of any one of claims 1-10, further comprising;
obtaining second kinematic data of the object as detected in a second image of the video, the second image being subsequent to the first image in the video;
determining fourth data by quantizing the kinematic data using the predefined quantization scheme; and
including the fourth data in the metadata.

12. A non-transitory computer-readable storage medium having stored thereon instructions for implementing the method according to any one of claims 1-11 when executed on one or more devices having processing capabilities.

13. A device (310) for handling metadata (320) associated with an object (102) detected in a video, the device configured for:
obtaining (S402) kinematic data (302) of the object as detected in a first image of the video;
determining (S404) first data (324) by quantizing the kinematic data using a predefined quantization scheme;
determining (S406) second data (326) by calculating a difference between the kinematic data and the quantized kinematic data; and
including (S408) the first data and the second data in the metadata.

14. A system (300) for handling metadata (320) associated with an object (102) detected in a video, the system comprising a first device (310) according to claim 13 and a second device (340) configured for:
saving (S410) the first data and the second data as metadata in a file associated with the object;
determining (S412) a time span since saving the first and second data as metadata in the file; and
upon the time span exceeding a threshold time span, deleting (S414) the second data from the file.

15. A system (300) for handling metadata (320) associated with an object (102) detected in a video, the system comprising a first device (310) according to claim 13 and a third device (360) configured for:
obtaining the metadata;
extracting the first data from the obtained metadata; and
disregarding to extract the second data from the obtained metadata.
